# EUROPÄISCHE PATENTSCHRIFT

(11) **EP 4 335 615 B1**
(45) Veröffentlichungstag und Bekanntmachung des Hinweises auf die Patenterteilung: **16.07.2025**
(21) Anmeldenummer: 23193412.6
(22) Anmeldetag: 25.08.2023
(51) Int. Cl.: B29C 49/36, B29C 49/58, B29C 49/78, B29C 49/06, B29C 49/46, B29C 49/42, B29L 31/00

(54) **VORRICHTUNG UND VERFAHREN ZUM UMFORMEN VON KUNSTSTOFFVORFORMLINGEN MIT GENEIGTEN ANSCHLÜSSEN AN RINGLEITUNGEN**
DEVICE AND METHOD FOR REFORMING PLASTIC PRE-FORMS WITH INCLINED CONNECTIONS ON RING LINES
DISPOSITIF ET PROCÉDÉ DE FORMAGE D'ÉBAUCHES EN PLASTIQUE DOTÉES DE RACCORDS INCLINÉS SUR DES CONDUITES ANNULAIRES

(30) Priorität: 06.09.2022 DE 102022122632
(43) Veröffentlichungstag der Anmeldung: 13.03.2024
(73) Patentinhaber: Krones AG, 93073 Neutraubling (DE)
(72) Erfinder: Brunner, Andreas, 93073 Neutraubling (DE); Hengl, Benedikt, 93073 Neutraubling (DE); Hoellriegl, Thomas, 93073 Neutraubling (DE); Kulzer, Markus, 93073 Neutraubling (DE); Meier, Dominik, 93073 Neutraubling (DE); Vogler, Daniel, 93073 Neutraubling (DE)
(74) Vertreter: Hannke Bittner & Partner mbB Regensburg

(56) Entgegenhaltungen:
- DE-A1- 102016 122 542
- DE-U1- 202004 021 477
- DE-U1- 202022 104 039
- US-A1- 2012 326 360

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Dabei werden üblicherweise erwärmte Kunststoffvorformlinge mit Druckluft beaufschlagt und zu Kunststoffbehältnissen wie Kunststoffflaschen umgeformt. Dabei ist es in jüngerer Zeit bekannt geworden, zur Expansion der Kunststoffvorformlinge mehrere Druckstufen, bzw. Druckniveaus einzusetzen. Bei einem hierzu bekannten gängigen Verfahren befindet sich auf einem Blasrad ein Ringkanal oder mehrere Ringkanäle, die jeweils in Verbindung mit den einzelnen Umformungsstationen bringbar sind, um diese so mit Druckluft zu beaufschlagen. Generell ist man dabei bei diesen Vorrichtungen bemüht, den Druckluftverbrauch, der eine erhebliche energetische Komponente darstellt zu reduzieren. Gattungsgemäße Vorrichtungen und Verfahren sind in den Patentschriften US2012/326360A1, DE202022104039U1, DE102016122542A1, DE202004021477U1 und DE102010032965A1 beschrieben.

Im internen Stand der Technik der Anmelderin werden derzeit gerundete Edelstahlrohre verwendet, welche horizontal angeschweißte Anschlüsse als Zu- und Abgänge für jede Umformungsstation verwenden. Aufgrund der beengten Platzverhältnisse muss der daran angeschlossene Schlauch mit einer 90° Winkelarmatur versehen werden. An seinem anderen Ende d.h. zu den Umformungsstationen hin ist der Schlauch mit einem geraden Anschluss versehen.

Die hierzu verwendeten Komponenten stammen meistens aus der Hydraulik. Der zulässige Betriebsdruck liegt bei den eingesetzten Nennweiten zwischen 250 und 400 bar. Aufgrund des hohen zulässigen Betriebsdruckes und der nach Norm geforderten 4-fachen Sicherheit sind die Armaturen sehr stabil aufgebaut. Hieraus resultiert im Verhältnis zum Nenndurchmesser ein relativ kleiner Innendurchmesser der Armaturen. So beträgt beispielsweise der Nenndurchmesser DN 19 mm und der Innendurchmesser 14 mm. Die heute üblicherweise eingesetzten Verbindungen an diesen Schlauchleitungen sind radial dichtend oder beruhen auf den etablierten Normen für 24° Schneidringverschraubungen wie z. B. ISO 8434, DIN 2353 oder DIN 3861.

Die vom Betriebsdruck her überdimensionierten Hydraulikkomponenten machen die Leitungsführung schwierig und wenig effektiv. Winkelarmaturen verursachen mehr Strömungsverluste als gerade Armaturen. Die Wandstärke von bis zu 3 mm verengt den lichten Querschnitt der Armatur sehr stark. Bei einem hohen benötigten Massenstrom einer Streckblasmaschine verursacht dies hohe Druckverluste und somit unnötig hohe Betriebskosten für den Anlagenbetreiber.

Die radiale Abdichtung und 24° Schneidringverschraubungen weisen teils sehr große Spalte und Hinterschneidungen auf, in denen sich Schmutz und andere Ablagerungen festsetzen können. Diese Spalten sind beispielsweise bei Reparaturen nur schwer zu reinigen. Es besteht die Gefahr, dass bei der Wiedermontage der Leitungen diese Verschmutzung die Dichtung, wie beispielsweise einen O-Ring beschädigen und eine Leckage die Folge ist.

Daneben sind teilweise vorhandene Prägungen an einer Presshülse nur schwer zu erkennen und eignen sich nur zur Nachverfolgung im Schadensfall. Sie eignen sich damit nicht zu einem raschen Erkennen z. B. minimal unterschiedlicher Schlauchlängen, einer richtig angeschlossener Verbindung, bei der Endmontage oder Fehlersuche. Da immer mehrere Schläuche (insbesondere mit leicht unterschiedlicher Länge) an einer Blasstation verbaut sind, ist es in der Vergangenheit immer wieder zu Verwechslungen gekommen.

Der vorliegenden Erfindung liegt daher die Aufgabe zugrunde, derartige Vorrichtungen energieeffizienter zu gestalten und insbesondere den Einsatz von Druckluft zu verringern. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Transporteinrichtung auf, welche die Kunststoffvorformlinge entlang eines vorgegebenen Transportpfads transportiert. Dabei weist die Transporteinrichtung einen drehbaren Transportträger auf, an dem eine Vielzahl von Umformungsstationen zum Umformen der Kunststoffvorformlinge zu den Kunststoffbehältnissen angeordnet ist.

Weiterhin weisen die Umformungsstationen jeweils Beaufschlagungseinrichtungen auf, um die Kunststoffvorformlinge mit einem fließfähigen und insbesondere gasförmigen Medium zu beaufschlagen. Weiterhin weist die Vorrichtung wenigstens einen drehbaren und mit der Drehbewegung des Transportträgers gekoppelten Ringkanal zum Speichern des fließfähigen und insbesondere gasförmigen Mediums auf, wobei dieser Ringkanal über Verbindungsleitungen in Strömungsverbindung mit den einzelnen Umformungsstationen steht und/oder in Strömungsverbindung mit den Umformungsstationen bringbar ist.

Erfindungsgemäß verläuft der Ringkanal in einer vorgegebenen Ebene und insbesondere einer horizontalen Ebene und an dem Ringkanal ist eine Vielzahl von Anschlüssen zum Anordnen der Verbindungsleitungen vorgesehen, wobei wenigstens einer dieser Anschlüsse sich ausgehend von dem Ringkanal in einer Richtung erstreckt, welche sich in einem Winkel A von wenigstens 20° gegenüber der Ebene, in welcher der Ringkanal verläuft, erstreckt.

Unter einer Erstreckung dieses Anschlusses wird insbesondere verstanden, dass dieser Anschluss wenigstens abschnittsweise einen rohrförmigen Abschnitt aufweist und dessen Haupterstreckungsrichtung sich unter dem genannten Winkel erstreckt.

Bevorzugt ist dieser Anschluss also derart angeordnet, dass eine Hauptströmungsrichtung des durch diesen Anschluss strömenden gasförmigen Mediums unter dem genannten Winkel verläuft.

Besonders bevorzugt tritt aus dem Ringkanal in Richtung der Umformungsstationen Luft unter einem Winkel aus, der ebenfalls gegenüber der Ebene des Ringkanals um wenigstens 20° geneigt ist. Dieser Winkel ist dabei insbesondere auf eine Hauptströmugnsrichtung des aus dem Anschluss austretenden gasförmigen Mediums bezogen. Besonders bevorzugt sind mehrere dieser Anschlüsse in dieser Weise geneigt, d. h. erstrecken sich in einem Winkel von wenigstens 20° gegenüber der Ebene des Ringkanals. Besonders bevorzugt sind alle Anschlüsse entsprechend geneigt. Besonders bevorzugt sind die Anschlüsse gegenüber der Ebene nach unten, d. h. in vertikaler Richtung nach unten geneigt.

Durch diese Anordnung der Anschlüsse kann die Führung der Verbindungsleitungen zu den einzelnen Umformungsstationen erheblich vereinfacht werden.

Besonders bevorzugt weisen die Umformungsstationen jeweils eine Reckeinrichtung auf, um die Kunststoffvorformlinge während ihrer Expansion in ihrer Längsrichtung zu dehnen. Zu diesem Zweck weisen die Reckeinrichtungen jeweils stangenartige Körper (auch als Reckstangen bezeichnet) auf, welche in die Kunststoffvorformlinge einführbar sind.

Bei einer weiteren bevorzugten Ausführungsform weist die Vorrichtung ein stationäres Druckreservoir und/oder Druckluftaggregat auf. Dabei kann es sich beispielweise um einen Kompressor oder um einen Druckluftanschluss handeln. Besonders bevorzugt weist die Vorrichtung auch eine Verteileinrichtung und insbesondere einen Drehverteiler auf, der die Druckluft ausgehend von dem stationären Aggregat auf den wenigstens einen Ringkanal verteilt.

Bei einer weiteren vorteilhaften Ausführungsform ist der wenigstens eine Ringkanal an dem Transportträger angeordnet, bzw. dreht sich mit diesem.

Bei einer weiteren vorteilhaften Ausführungsform weist die Vorrichtung einen Reinraum auf, innerhalb dessen die Umformung erfolgt. Weiterhin ist bevorzugt eine Abdichteinrichtung vorgesehen, um den Reinraum gegenüber einer (unsterilen) Umgebung abzudichten. Bei dieser Dichtungseinrichtung kann es sich beispielsweise um einen umlaufenden und mit einer Flüssigkeit und insbesondere Wasser befüllbaren Kanal handeln. In diesem Falle ist ein sog. Wasserschloss vorgesehen, um den Reinraum gegenüber seiner Umgebung abzudichten.

Bei einer bevorzugten Ausführungsform ist der besagte Winkel größer als 25°, bevorzugt größer als 30°, bevorzugt größer als 35° und besonders bevorzugt größer als 40°.

Bei einer weiteren bevorzugten Ausführungsform ist der besagte Winkel kleiner als 80°, bevorzugt kleiner als 70°, bevorzugt kleiner als 60° und besonders bevorzugt kleiner als 50°.

Besonders bevorzugt sind die Anschlüsse bzw. die Abgänge um 45° nach unten gedreht. Auf diese Weise vereinfacht sich die Schlauchverlegung und ein 90° Bogen an dem Schlauch kann vermieden werden. Weiterhin muss die Schlauchleitung nur einen Bogen von 45° beschreiben. Auf diese Weise kann der Mindestbiegeradius der Verbindungsleitungen, bei denen es sich insbesondere um Schläuche handelt, bei gleichem Einbau entsprechend größer sein.

Auf diese Weise können Schläuche verwendet werden, welche Anforderungen weniger strenger Normen erfüllen, beispielsweise der Norm DIN 20066 oder DIN EN 853. Im Stand der Technik mussten Schläuche verwendet werden, deren zulässiger Biegeradius kleiner, bzw. besser als in der entsprechenden Norm gefordert ist, waren. Auf diese Weise waren im Stand der Technik die Wahl der Hersteller und die Materialauswahl und auch die Möglichkeiten bei Lieferengpässen stark begrenzt.

Bei einer weiteren vorteilhaften Ausführungsform sind daher die Verbindungsleitungen Schlauchverbindungen und insbesondere Schlauchverbindungen entsprechend der DIN 20066 oder der DIN IN 853 und insbesondere maximal entsprechend dieser Normen. Dies bedeutet, dass die Verbindungsleitungen keiner höheren Norm als den genannten Normen entsprechen müssen und daher kostengünstiger zur Verfügung zu stellen sind..

Besonders bevorzugt bestehen die Schlauchverbindungen aus NBR (Nitrile Butadiene Rubber) oder aus EPDM (Ethylen-Propylen-Dien-Kautschuk). Bei einer anderen bevorzugten Ausführungsform bestehen die Verbindungsleitungen aus PTFE (Polytetrafluorethylen). Dieses Material ist insbesondere für sterile Anwendungen geeignet, da es mit Sterilisationsmitteln (wie etwa Wasserstoffperoxid) sterilisiert werden kann.

Bei einer weiteren vorteilhaften Ausführungsform sind die Verbindungsleitungen lösbar an dem Ringkanal angeordnet und insbesondere werkzeugfrei lösbar an dem Ringkanal angeordnet. So ist es denkbar, dass die Verbindungsleitungen Schläuche und Schlauchtüllen aufweisen, welche in die entsprechenden Anschlüsse eingesteckt (oder auf diese aufgesteckt) und dort verbunden werden können. Dabei ist es möglich, dass die Verbindung mit einem Sprengring, beispielsweise einem Runddrahtsprengring hergestellt wird. Dies wird untenstehend unter Bezugnahme auf die Figuren genauer erläutert.

Bei einer bevorzugten Ausführungsform ist jeder Umformungsstation eine Ventilanordnung mit einer Vielzahl von Ventileinrichtungen zugeordnet, bzw. jede Umformungsstation weist eine Ventilanordnung mit einer Vielzahl von Ventileinrichtungen auf, um die Beaufschlagung der Kunststoffvorformlinge mit mehreren Druckniveaus zu steuern. Besonders bevorzugt sind wenigstens zwei, bevorzugt wenigstens drei und bevorzugt wenigstens vier derartiger Ventile an der Ventilanordnung vorgesehen.

So kann beispielsweise ein erstes Ventil einen Vorblasdruck steuern, ein zweites Ventil einen Zwischenblasdruck und ein drittes Ventil einen Fertigblasdruck. Über ein viertes Ventil kann Druckluft in die Umgebung entlassen werden. Besonders bevorzugt ist die Vorrichtung dazu geeignet und bestimmt, die Kunststoffvorformlinge mit wenigstens drei unterschiedlichen Druckstufen, bevorzugt mit wenigstens vier Druckstufen zu beaufschlagen. Daneben wäre jedoch auch die Verwendung von mehr als vier Druckstufen denkbar, die besonders bevorzugt kaskadiert sein könnten.

Bei einer weiteren vorteilhaften Ausführungsform weist die Vorrichtung eine Vielzahl von Ringkanälen auf, wobei bevorzugt jeder dieser Ringkanäle Anschlüsse aufweist, welche sich ausgehend von dem Ringkanal in eine Richtung erstrecken, welche sich in einem Winkel von wenigstens 20° gegenüber der Ebene des jeweiligen Ringkanals erstreckt. Bevorzugt liegt auch hinsichtlich dieser Ringkanäle der besagte Winkel in den oben angegebenem Dimensionen.

Besonders bevorzugt sind die besagten Ringkanäle in einer vertikalen Richtung übereinander angeordnet. Dabei ist es möglich, dass die Ringkanäle jeweils gleichartig ausgebildet sind, was die Herstellung der gesamten Vorrichtung vereinfacht.

Bei einer weiteren vorteilhaften Ausführungsform sind Armaturen der Vorrichtung auf einen vorgegebenen zulässigen Betriebsdruck ausgelegt, wobei dieser Betriebsdruck bevorzugt zwischen 35 und 45 bar, bevorzugt zwischen 37 und 43 bar und besonders bevorzugt zwischen 39 und 41 bar liegt. Durch einen geringeren Betriebsdruck kann bei gleicher Nennweite der Verbindungsleitung bzw., des Schlauchs der Innendurchmesser der Schlauchtüllen vergrößert werden.

So ist es beispielsweise möglich, diese Schlauchtülle von 14 auf 17 mm Innendurchmesser zu vergrößern, was zu einer um 47 % vergrößerten Querschnittsfläche führt. Bei einem gleichen Massenstrom kommt es in diesem Fall zu erheblich weniger Druckverlust. Auch der sog. KV-Wert (d. h. der Durchflussfaktor oder Durchflusskoeffizient) der Verbindungsleitung erhöht sich um ca. 50 %.

Bei einer weiteren bevorzugten Ausführungsform ist jeder Ringkanal bzw. Reservoir mit einem Ventil und bevorzugt genau einem Ventil der jeweiligen Ventilanordnungen der Umformungsstationen in Strömungsverbindung bringbar.

Bei einer weiteren vorteilhaften Ausführungsform weist jede Verbindungsleitung einen ersten Endabschnitt zum Anschließen der Verbindungsleitung an eine Ventilanordnung und insbesondere eine Ventileinrichtung dieser Ventilanordnung der Umformungsstation auf und einen zweiten Endabschnitt zum Anschließen der Verbindungsleitung an den Ringkanal und diese Endabschnitte sind bevorzugt in gleicher oder unterschiedlicher Weise gekennzeichnet. Insbesondere sind diese Endabschnitte derart unterschiedlich gekennzeichnet, dass dies optisch bzw. auf Sicht unterschieden werden kann (z.B. hinsichtlich Farbe, Muster und/oder Geometrie). So ist es beispielsweise möglich, dass an die vorkonfektionierten Schlauchleitungen an beiden Enden eine unterschiedliche farbige Markierung angebracht wird. Auch die Anschlussteile, bzw. Baugruppen sind bevorzugt mit den zugehörigen Farben gekennzeichnet. Auf diese Weise ist eine Verwechslung der Schlauchleitung oder ein falsches Anschließen ausgeschlossen.

Auch bei einer evtl. Fehlersuche ist ein Abgleich der Farben auch aus einiger Entfernung relativ leicht möglich. Bevorzugt sind diese Farben derart gewählt, dass auch Personen mit beeinträchtigtem Farbsehvermögen, wie etwa einer Rot-Grün-Sehschwäche diese gut erkennen können. Als Kennzeichnung käme beispielsweise in Betracht, farbige Kabelbinder, lackierte oder beschichtete Metallbänder, farbige O-Ringe oder einen eingefärbten Grundwerkstoff zu verwenden. Auch könnten Klebepunkte, Aufkleber und dergleichen in unterschiedlichen Farben gestaltet sein.

Bei einer weiteren vorteilhaften Ausführungsform weist die Vorrichtung mehrere Ringkanäle auf und diese Ringkanäle sind in einer gemeinsamen Ringkanalanordnung ausgebildet, wobei diese Ringkanalanordnung einen inneren Ringkanalteil aufweist, der jeden Ringkanal begrenzt sowie einen äußeren Ringkanalteil, der ebenfalls jeden Ringkanal begrenzt und der innere Ringkanalteil innerhalb des äußeren Ringkanalteils angeordnet ist. Besonders bevorzugt sind dabei der innere und/oder der äußere Ringkanalteil jeweils einteilig ausgebildet. Dabei ist es möglich, dass diese beiden Ringkanalteile jeweils ein kreisförmiges oder kreisringförmiges Profil aufweisen.

Es wird darauf hingewiesen, dass diese Ausgestaltung der Ringkanäle auch unabhängig von der oben beschriebenen Erfindung verwendet werden kann.

Die vorliegende Erfindung ist daher weiterhin auf eine Vorrichtung zum Umformen von Kunststoffvorformlingen zu Kunststoffbehältnissen gerichtet, welche eine Transporteinrichtung aufweist, welche die Kunststoffvorformlinge entlang eines vorgegebenen Transportpfads transportiert, wobei die Transporteinrichtung einen drehbaren Transportträger aufweist, an dem eine Vielzahl von Umformungsstationen zum Umformen der Kunststoffvorformlinge zu den Kunststoffbehältnissen angeordnet ist und wobei die Umformungsstationen jeweils Beaufschlagungseinrichtungen aufweisen, um die Kunststoffvorformlinge mit dem fließfähigen Medium zu beaufschlagen.

Weiterhin weist die Vorrichtung wenigstens zwei und bevorzugt eine Vielzahl von drehbaren und mit der Drehbewegung des Transportträgers gekoppelten Ringkanälen zum Speichern des fließfähigen und insbesondere gasförmigen Mediums auf.

Bevorzugt sind diese Ringkanäle in einer gemeinsamen Ringkanalanordnung ausgebildet, wobei diese Ringkanalanordnung einen inneren Ringkanalteil aufweist, der jeden Ringkanal begrenzt und einen äußeren Ringkanalteil, der ebenfalls jeden Ringkanal begrenzt, wobei der innere Ringkanalteil innerhalb des äußeren Ringkanalteils angeordnet ist.

Besonders bevorzugt weisen der innere Ringkanalteil (radial) außenliegende Ausnehmungen auf, welche einen Teil der Ringkanäle bilden. Besonders bevorzugt weist der äußere Ringkanalteil ebenfalls (radial) innenliegende Ausnehmungen auf, die einen Teil der Ringkanäle ausbilden.

Besonders bevorzugt sind die Ausnehmungen des inneren Ringkanalteils und des äußeren Ringkanalteils gleich, bzw. gleich groß, sodass die jeweiligen Ausnehmungen deckungsgleich aufeinandergelegt werden können, um so einen geschlossenen Ringkanal auszubilden.

Besonders bevorzugt sind sowohl der innere Ringkanalteil als auch der äußere Ringkanalteil rotationssymmetrisch ausgebildet.

Bei einer weiteren vorteilhaften Ausführungsform sind in der Ringkanalanordnung Ventile ausgebildet, welche ein Überströmen von Luft von einem Ringkanal in einen anderen Ringkanal ermöglichen.

Bei einer weiteren vorteilhaften Ausführungsform ist eine Dichtungseinrichtung vorgesehen, um die Kanäle bezüglich einander abzudichten. So können beispielsweise an dem inneren Ringkanalteil um diesen Ringkanalteil umlaufende O-Ringe angeordnet sein. Daneben wären aber auch andere Arten von rotativen Dichtungen denkbar, wie beispielsweise Quadringe, Radialwellendichtungen, V-Ringe und dergleichen

Daneben wäre es auch denkbar, eine zusätzliche Dichtungseinrichtung an dem oberen Ringkanal und dem unteren Ringkanal vorzusehen.

Besonders bevorzugt sind in wenigstens einem Ringkanal und bevorzugt sind in mehreren Ringkanälen Druckmesseinrichtungen integriert.

Bei einer weiteren bevorzugten Ausführungsform ist die Verbindungsleitung spaltfrei und/oder plan an den Anschluss und/oder an die Ventilanordnung anschließbar. So kann die Verbindungsleitung beispielsweise an einem Ende einen O-Ring (oder etwa eine Dichtscheibe oder einen Quadring) aufweisen, bzw. an einer Stirnfläche einen O-Ring aufweisen und so spaltfrei an einem Anschluss befestigt werden.

Bevorzugt sind Spalte und Hinterschneidungen bei einem plan abdichtenden System nicht gegeben. Die Verbindung zwischen der Verbindungsleitung und dem Anschluss ist bevorzugt spaltfrei. Bei einem Tausch der Verbindungsleitung und insbesondere der Schlauchleitung kann die Planfläche des Stutzens leicht gereinigt werden und auch auf Beschädigung kontrolliert werden. Sollte ein Grat oder Überstand vorhanden sein, kann dieser leicht mit einem Abziehstein beseitigt werden. Eine planare Abdichtung wird wiederum in einer bestehenden Maschine eingesetzt.

Bei einer bevorzugen Ausführungsform weist die Verbindungsleitung einen Schlauch und eine Schlauchtülle auf. Besonders bevorzugt weist die Schlauchtülle einen Innendurchmesser auf, der größer ist als 13 mm, bevorzugt größer als 14 mm, bevorzugt größer als 15 mm und besonders bevorzugt größer als 16 mm. Besonders bevorzugt weist die Schlauchtülle ein Innendurchmesser auf, der kleiner ist als 24mm, bevorzugt kleiner als 22 mm, bevorzugt kleiner als 20 mm, bevorzugt kleiner als 19 mm und besonders bevorzugt kleiner als 18 mm.

Durch die vorgeschlagenen Vorgehensweisen können die Druckverluste innerhalb der Vorrichtung deutlich reduziert werden. Auf diese Weise steigt der energetische Wirkungsgrad der Vorrichtung und die Betriebskosten sinken. Auch die Umweltbilanz kann auf diese Weise verbessert werden.

Die vorliegende Erfindung ist weiterhin auf ein Verfahren zum Umformen von Kunststoffvorformlingen zu Kunststoffbehältnissen gerichtet, wobei eine Transporteinrichtung die Kunststoffvorformlinge entlang eines vorgegebenen Transportpfads transportiert und wobei die Transporteinrichtung einen drehbaren Transportträger aufweist, an dem eine Vielzahl von Umformungsstationen zum Umformen von Kunststoffvorformlingen zu den Kunststoffbehältnissen angeordnet ist. Dabei weisen die Umformungsstationen jeweils Beaufschlagungseinrichtungen auf, welche die Kunststoffvorformlinge mit dem fließfähigen Medium beaufschlagen und die Vorrichtung weist wenigstens einen drehbaren und mit der Drehbewegung des Transportträgers gekoppelten Ringkanal auf, welcher das fließfähige und insbesondere gasförmige Medium speichert und dieser Ringkanal steht über Verbindungsleitungen in Strömungsverbindung mit den einzelnen Umformungsstationen.

Erfindungsgemäß verläuft der Ringkanal in einer bevorzugten Ebene und insbesondere einer horizontalen Ebene und an dem Ringkanal ist eine Vielzahl von Anschlüssen zum Anordnen der Verbindungsleitungen vorgesehen und wenigstens einer dieser Anschlüsse erstreckt sich ausgehend von dem Ringkanal in einer Richtung, welche sich in einem Winkel von wenigstens 20° gegenüber der Ebene des Ringkanals erstreckt und insbesondere nach unten erstreckt.

Unter der Ebene des Ringkanals wird dabei insbesondere eine Ebene verstanden, welche durch eine geometrische Linie aufgespannt wird, welche im Zentrum des jeweiligen Ringkanals verläuft.

Besonders bevorzugt werden die Kunststoffvorformlinge mit mehreren unterschiedlichen Druckniveaus beaufschlagt, um expandiert zu werden.

Bei einem weiteren bevorzugten Verfahren erfolgt die Expansion der Kunststoffvorformlinge innerhalb eines Reinraums.

Besonders bevorzugt weist die Vorrichtung mehrere Ringkanäle auf.
- Fig. 1: eine schematische Darstellung einer erfindungsgemäßen Vorrichtung;
- Fig. 2: eine Darstellung einer Vorrichtung nach dem Stand der Technik;
- Fig. 3: eine Detaildarstellung der in Fig. 2 gezeigten Vorrichtung;
- Fig. 4: eine Darstellung einer erfindungsgemäßen Vorrichtung;
- Fig. 5: eine Detaildarstellung der in Fig. 4 gezeigten Vorrichtung;
- Fig. 6: eine Darstellung der Verbindung der an dem Ventilblock;
- Fig. 7: eine Detaildarstellung der in Fig. 6 gezeigten Ansicht;
- Fig. 8: eine Detaildarstellung der in Fig. 6 gezeigten Ansicht;
- Fig. 9: eine Darstellung einer Leitungsverbindung nach dem Stand der Technik;
- Fig. 10: eine Darstellung eines erfindungsgemäßen Anschlusses;
- Fig. 11: eine Darstellung einer erfindungsgemäßen Ringkanalanordnung; und
- Fig. 12: eine weitere Darstellung einer erfindungsgemäßen Ringkanalanordnung.

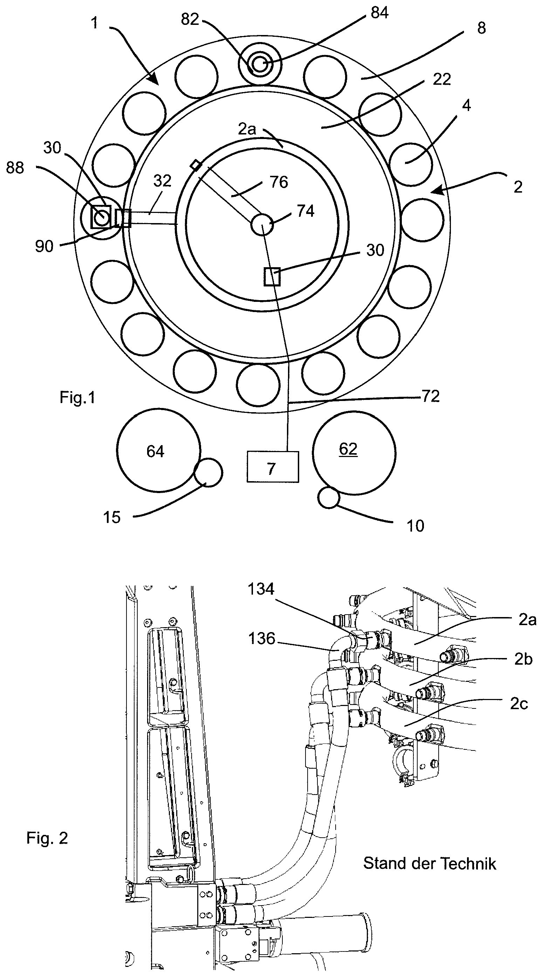

Fig. 1 zeigt eine Vorrichtung 1 zum Umformen von Kunststoffvorformlingen 10 zu Kunststoffbehältnissen 15. Diese Vorrichtung weist einen drehbaren Träger 22 auf, an dem eine Vielzahl von Umformungsstationen 4 angeordnet ist. Diese einzelnen Umformungsstationen weisen jeweils Blasformeinrichtungen 82 auf, die in ihrem Inneren einen Hohlraum zum Expandieren der Kunststoffvorformlinge ausbilden.

Das Bezugszeichen 84 kennzeichnet eine Beaufschlagungseinrichtung, welche zum Expandieren der Kunststoffvorformlinge 10 dient. Hierbei kann es sich beispielsweise um eine Blasdüse handeln, welche an eine Mündung der Kunststoffvorformlinge anlegbar ist, um diese so zu expandieren. Daneben wäre es auch denkbar, dass die Blasdüse an der Blasformeinrichtung abdichtet.

Das Bezugszeichen 12 kennzeichnet eine Ventilanordnung wie einen Ventilblock, der bevorzugt eine Vielzahl von Ventilen aufweist, welche die Beaufschlagung der Kunststoffvorformlinge mit unterschiedlichen Druckniveaus steuern.

Bei einem bevorzugten Verfahren werden die Kunststoffvorformlinge zunächst mit einem Vorblasdruck P1 beaufschlagt, anschließend mit mindestens einem Zwischenblasdruck Pi, der höher ist als der Vorblasdruck und schließlich mit einem Fertigblasdruck P2, der höher ist als der Zwischenblasdruck Pi. Nach der Expansion der Kunststoffbehältnisse werden bevorzugt die Drücke bzw. die Druckluft wieder von dem Behältnis in die einzelnen Druckreservoirs zurückgeführt. Bevorzugt wird noch eine weitere Druckstufe vorgesehen.

Das Bezugszeichen 88 kennzeichnet eine Reckstange, die dazu dient, die Kunststoffvorformlinge in ihrer Längsrichtung zu dehnen. Bevorzugt weisen sämtliche Umformungsstationen derartige Blasformen 82 sowie Reckstangen 88 auf. Diese Reckstange ist bevorzugt Bestandteil einer mit 30 bezeichneten Reckeinrichtung.

Bevorzugt liegt die Anzahl dieser Umformungsstationen 4 zwischen 2 und 100, bevorzugt zwischen 4 und 60, bevorzugt zwischen 6 und 40.

Die Kunststoffvorformlinge 10 werden über eine erste Transporteinrichtung 62 wie insbesondere aber nicht ausschließlich einen Transportstern der Vorrichtung zugeführt. Über eine zweite Transporteinrichtung 64 werden die Kunststoffbehältnisse 15 abtransportiert.

Das Bezugszeichen 7 kennzeichnet eine Druckbereitstellungseinrichtung wie etwa einen Kompressor oder auch einen Druckluftanschluss. Die Druckluft wird über eine Verbindungsleitung 72 zu einem Drehverteiler 74 gefördert und von diesem über eine weitere Leitung 76 an das Reservoir 2a angegeben, bei dem es sich hier um einen Ringkanal handelt. Damit dient bevorzugt dieser Drehverteiler zu dem Zweck, Luft von einem stationären Teil der Vorrichtung in einen sich drehenden Teil der Vorrichtung zu führen.

Neben diesem dargestellten Ringkanal 2a sind bevorzugt noch weitere Ringkanäle vorgesehen, die in der in Fig. 1 gezeigten Darstellung jedoch durch den Ringkanal 2a verdeckt sind, beispielsweise darunterliegen. Das Bezugszeichen 32 kennzeichnet eine Verbindungsleitung, welche die Druckluft an eine Umformungsstation 4 bzw. deren Ventilblock 12 abgibt. Bevorzugt ist jeder der Ringkanäle über entsprechende Verbindungsleitungen mit sämtlichen Umformungsstationen verbunden. Diese Verbindungsleitung ist bevorzugt in dem drehenden Teil der Vorrichtung angeordnet.

Das Bezugszeichen 8 kennzeichnet schematisch einen optionalen Reinraum, der hier bevorzugt ringförmig ausgebildet ist und den Transportpfad der Kunststoffvorformlinge 10 umgibt. Bevorzugt ist eine (geometrische) Drehachse bezüglich derer der Transportträger 22 drehbar ist, außerhalb des Reinraums 8 angeordnet. Bevorzugt ist der Reinraum mit einer Dichtungseinrichtung, welche bevorzugt wenigstens zwei Wasserschlösser aufweist, gegenüber der unsterilen Umgebung abgedichtet.

Weiterhin weist die Vorrichtung eine (in Fig. 1 nicht gezeigte) Deckeleinrichtung auf, welche den Reinraum 8 nach oben hin begrenzt. Diese Deckeleinrichtung ist dabei bevorzugt an wenigstens einer der Reckeinrichtungen 30 angeordnet.

Fig. 2 zeigt eine Vorrichtung nach dem Stand der Technik. Man erkennt, dass hier drei Ringkanäle 2a, 2b, 2c vorgesehen sind, die jeweils Druckluft unter unterschiedlichen Drücken speichern. An diesen Ringkanälen sind Anschlüsse 134 angeordnet, welche sich in einer horizontalen Richtung erstrecken. Das Bezugszeichen 136 kennzeichnet eine Winkelverbindung, mittels derer die Luft zu den Schlauchverbindungen geführt wird, wobei diese Schlauchverbindungen wiederum zu dem Ventilblock führen.

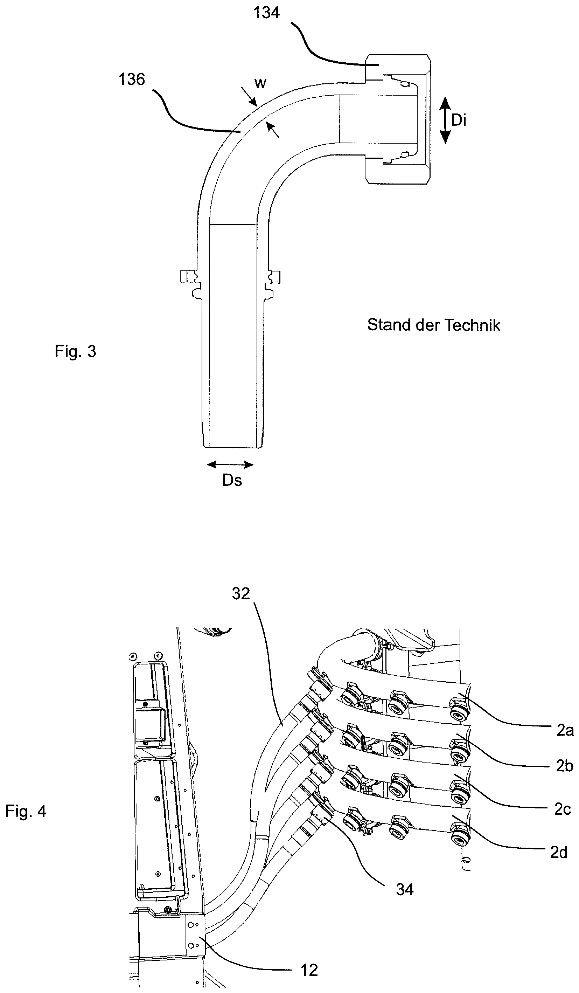

Fig. 3 zeigt eine Darstellung aus der sich wieder der sich in der horizontalen Richtung erstreckende Anschluss gezeigt ist sowie auch die Winkelverbindung 136, an der wiederum der Schlauch angeordnet ist. Man erkennt, dass der Schlauchdurchmesser Ds, auch aufgrund der Wandstärke w der Winkelverbindung deutlich größer ist als der Innendurchmesser Di der Armatur. Dies führt zu einem erheblichen Ressourcenverbrauch an Druckluft.

Fig. 4 zeigt eine erfindungsgemäße Ausführungsform. Man erkennt, dass hier vier Ringkanäle 2a. 2b. 2c und 2d vorgesehen sind und sich die Anschlüsse 34 hier schräg nach unten erstrecken. Auf diese Weise kann auch auf die oben gezeigte Winkelverbindung verzichtet werden. Das Bezugszeichen 12 kennzeichnet die Ventilanordnung bzw. den Ventilblock, in welchen die einzelnen Schlauchverbindungen münden. Wie oben erwähnt, weist bevorzugt jede Umformungsstation einen solchen Ventilblock auf.

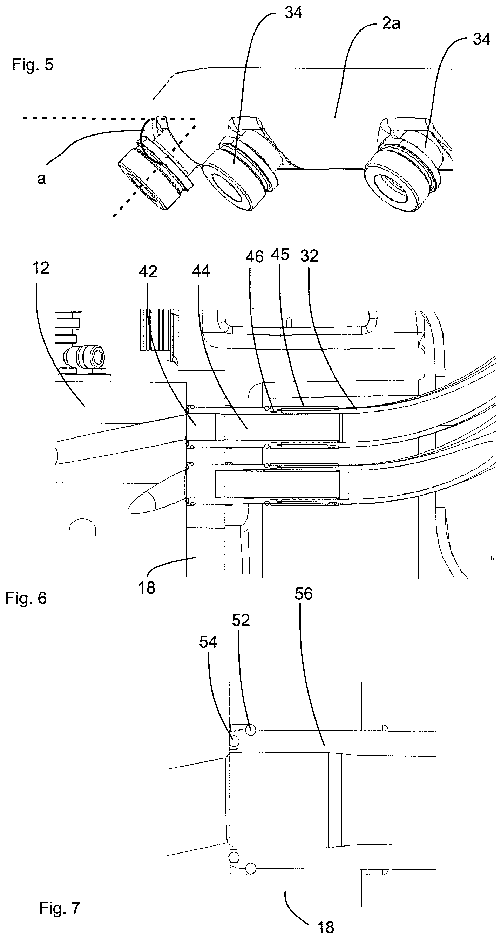

Fig. 5 zeigt eine Detaildarstellung der in Fig. 4 gezeigten Vorrichtung. Auch hier ist wieder der Ringkanal dargestellt sowie drei an diesem angeordnete Anschlüsse 34. Die Ebene des Ringkanals ist hier horizontal sowie senkrecht zu der Figurenebene. Man erkennt, dass die Anschlüsse 34 sich gegenüber dieser Ebene schräg nach unten erstrecken und hier um einen Winkel a nach unten geneigt sind, der bei 45° liegt.

Fig. 6 zeigt eine Darstellung einer Anordnung der Schlauchverbindung an dem Ventilblock und Fig. 7 eine Detaildarstellung der in Fig 6 gezeigten Darstellung. Dabei zeigt das Bezugszeichen 44 einen Anschluss an dem Ventilblock, der sich bevorzugt in horizontaler Richtung erstreckt.

An diesem Anschluss 44 ist über ein Rastmittel 46 einer Verbindungshülse die Schlauchverbindung angeklemmt.

Die Schlauchtülle 56 wird durch die Bohrung im Lagerbock 18 gesteckt, der Runddrahtsprengring 52 wird auf die Tülle geschoben, bis er in die dafür vorgesehene Nut einrastet. Anschließend wird der Schlauch zurückgezogen, bis der Runddrahtsprengring am Lagerbock 18 anliegt. Das Bezugszeichen 54 kennzeichnet eine O-Ring Dichtung.

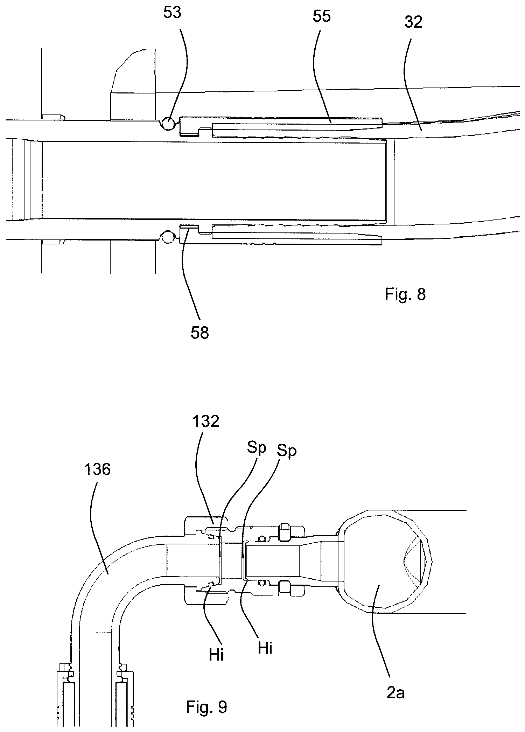

Fig. 8 zeigt eine weitere Vergrößerung der in Fig. 6 gezeigten Darstellung. Diese zeigt die Anbindung der Schlauchverbindung 34. Dabei ist eine Presshülse 55 vorgesehen, sowie ein (farbiger Ring 53 zum Kennzeichnen der verschiedenen Schlauchleitungen.

Fig. 9 zeigt einen Anschluss der Winkelverbindung 136 an dem Anschluss 132. Hier treten mehrere Spalte Sp welche die Drucklufteffizienz beeinträchtigen auf, sowie auch Hinterschneidungen Hi, an denen sich Verschmutzungen ablagern können.

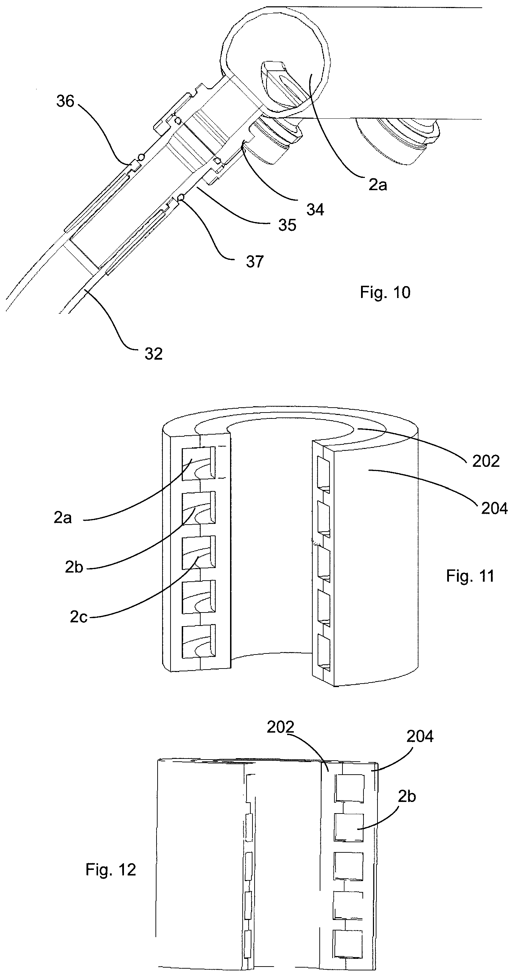

Die Figur 10 zeigt eine erfindungsgemäße Anordnung der Schlauchverbindung 32.

Spalten und Hinterschneidungen sind bei diesem plan abdichtenden System nicht gegeben, insbesondere ist die Verbindung V spaltfrei. Beim Tausch der Schlauchleitung ist die Planfläche des Stutzens leicht zu reinigen und auf Beschädigung zu kontrollieren. Auch ein Grad oder Überstand einer eingeschlagenen Macke sind z.B. mit einem Abziehstein leicht zu beseitigen.

Das Bezugszeichen 37 kennzeichnet einen O-Ring. Dieser kann zur Unterscheidung der jeweiligen Enden der Schlauchverbindung in eine bestimmen Farbe gehalten sein, wohingegen der O-Ring 53 (vgl. Fig. 8) in einer anderen Farbe gehalten ist.

Weiterhin ist es auch denkbar, einen bestimmten Schlauch an beiden Enden mit der gleichen Farbe zu kennzeichnen. So könnte beispielsweise blau für das Vorblasen vorgesehen sein, und gelb für das Fertigblasen. Daneben sind auch armbandartige Kennzeichnungen mit Kugeln, Pyramiden, Würfeln und dergleichen denkbar.

Die Fig. 11 und 12 zeigen eine erfindungsgemäße Ringkanalanordnung. Diese weist einen ersten, inneren Ringkanalteil 202 und einen zweiten, äußeren Ringkanalteil 204 auf. Der erste, innere Ringkanalteil weist eine Vielzahl von nach außen offenen Ausnehmungen 202a auf und der äußere Ringkanalteil weist eine Vielzahl von nach radial innen offenen Ausnehmungen 204a auf.

Nach einem Zusammenfügen der Ringkanalteile 202, 204 bilden begrenzen bzw. bilden diese Ausnehmungen 202a, 204a jeweils die einzelnen Ringkanäle 2a, 2b, 2c.

Bevorzugt sind die beiden Ringkanalteile konzentrisch zu einander. Zwischen den Rinkanalteilen können Dichtungseinrichtungen angeordnet sein.

## Patentansprüche

1. Vorrichtung (1) zum Umformen von Kunststoffvorformlingen (10) zu Kunststoffbehältnissen (15) mit einer Transporteinrichtung (2), welche die Kunststoffvorformlinge (10) entlang eines vorgegebenen Transportpfads (P) transportiert, wobei die Transporteinrichtung einen drehbaren Transportträger (22) aufweist, an dem eine Vielzahl von Umformungsstationen zum Umformen der Kunststoffvorformlinge (10) zu den Kunststoffbehältnissen (15) angeordnet ist, wobei die Umformungsstationen jeweils Beaufschlagungseinrichtungen (84) aufweisen, um die Kunststoffvorformlinge mit einem fließfähigen und insbesondere gasförmigen Medium zu beaufschlagen und wobei die Vorrichtung (1) wenigstens einen drehbaren und mit der Drehbewegung des Transportträgers (22) gekoppelten Ringkanal (2a) zum Speichern des fließfähigen und insbesondere gasförmigen Mediums aufweist und dieser Ringkanal über Verbindungsleitungen (32) in Strömungsverbindung mit den einzelnen Umformungsstationen (4) steht.
**dadurch gekennzeichnet, dass**
der Ringkanal in einer vorgegebenen Ebene und insbesondere einer horizontalen Ebene verläuft und an dem Ringkanal eine Vielzahl von Anschlüssen (34) zum Anordnen der Verbindungsleitungen vorgesehen ist und wenigstens einer dieser Anschlüsse sich ausgehend von dem Ringkanal in einer Richtung erstreckt, welche sich in einem Winkel a von wenigstens 20° gegenüber der Ebene des Ringkanals erstreckt.

2. Vorrichtung (1) nach Anspruch 1,
**dadurch gekennzeichnet, dass**
der Winkel a größer ist als 25°, bevorzugt größer als 30°, bevorzugt größer als 35° und besonders bevorzugt größer als 40° und/oder der Winkel a kleiner ist als 80°, bevorzugt kleiner als 70°, bevorzugt kleiner als 60° und besonders bevorzugt kleiner als 50°.

3. Vorrichtung (1) nach wenigstens einem der vorangegangenen Ansprüche,
**dadurch gekennzeichnet, dass**
die Verbindungsleitungen Schlauchverbindungen sind und insbesondere Schlauchverbindungen entsprechend der DIN 20066 oder DIN EN 853 und insbesondere maximal entsprechend der der DIN 20066 oder DIN EN 853.

4. Vorrichtung (1) nach wenigstens einem der vorangegangenen Ansprüche,
**dadurch gekennzeichnet, dass**
die Verbindungsleitungen lösbar an dem Ringkanal angeordnet sind und insbesondere werkzeugfrei lösbar an dem Ringkanal angeordnet sind.

5. Vorrichtung (1) nach wenigstens einem der vorangegangenen Ansprüche,
**dadurch gekennzeichnet, dass**
jede Umformungsstation eine Ventilanordnung mit einer Vielzahl von Ventileinrichtungen aufweist, um die Beaufschlagung der Kunststoffvorformlinge mit mehreren Druckniveaus zu steuern.

6. Vorrichtung (1) nach wenigstens einem der vorangegangenen Ansprüche,
**dadurch gekennzeichnet, dass**
die Vorrichtung (1) eine Vielzahl von Ringkanälen (2a, 2b, 2c, 2d) aufweist und jeder dieser Ringkanäle Anschlüsse aufweist, welche sich ausgehend von dem Ringkanal in einer Richtung erstrecken, welche sich in einem Winkel a von wenigstens 20° gegenüber der Ebene des jeweiligen Ringkanals erstreckt.

7. Vorrichtung (1) nach wenigstens einem der vorangegangenen Ansprüche,
**dadurch gekennzeichnet, dass**
jede Verbindungsleitung einen ersten Endabschnitt zum Anschliessen an eine Ventilanordnung der Umformungsstation und einen zweiten Endabschnitt zum Anschlie-ßen der Verbindungsleitung an den Ringkanal aufweist und diese Endabschnitte in gleicher oder unterschiedlicher Weise gekennzeichnet sind.

8. Vorrichtung (1) nach wenigstens einem der vorangegangenen Ansprüche,
**dadurch gekennzeichnet, dass**
die Vorrichtung mehrere Ringkanäle (2a, 2b, 2c) aufweist und diese Ringkanäle (2a, 2b, 2c..) in einer gemeinsamen Ringkanalanordnung (200) ausgebildet sind, wobei dieses Ringkanalanordnung einen inneren Ringkanalteil (202) aufweist, der jeden Ringkanal (2a, 2b, 2c) begrenzt und einen äußeren Ringkanalteil (204), der jeden Ringkanal (2a, 2b, 2c) begrenzt, wobei der innere Ringkanalteil (202) innerhalb des äußeren Ringkanalteils angeordnet ist.

9. Vorrichtung (1) nach wenigstens einem der vorangegangenen Ansprüche,
**dadurch gekennzeichnet, dass**
die Verbindungsleitung spaltfrei und/oder plan an den Anschluss (34) anschließbar ist.

10. Vorrichtung (1) nach wenigstens einem der vorangegangenen Ansprüche,
**dadurch gekennzeichnet, dass**
die Verbindungsleitung einen Schlauch und eine Schlauchtülle aufweist.

11. Verfahren zum Umformen von Kunststoffvorformlingen (10) zu Kunststoffbehältnissen (15) wobei eine Transporteinrichtung (2) die Kunststoffvorformlinge (10) entlang eines vorgegebenen Transportpfads (P) transportiert, wobei die Transporteinrichtung einen drehbaren Transportträger (22) aufweist, an dem eine Vielzahl von Umformungsstationen zum Umformen der Kunststoffvorformlinge (10) zu den Kunststoffbehältnissen (15) angeordnet ist, wobei die Umformungsstationen jeweils Beaufschlagungseinrichtungen (84) aufweisen, welche die Kunststoffvorformlinge mit dem fließfähigen Medium beaufschlagen und wobei die Vorrichtung (1) wenigstens einen drehbaren und mit der Drehbewegung des Transportträgers (22) gekoppelten Ringkanal (2a) aufweist, welcher das fließfähige und insbesondere gasförmigen Medium speichert und dieser Ringkanal über Verbindungsleitungen (32) in Strömungsverbindung mit den einzelnen Umformungsstationen (4) steht.
**dadurch gekennzeichnet, dass**
der Ringkanal in einer bevorzugten Ebene und insbesondere einer horizontalen Ebene verläuft und an dem Ringkanal eine Vielzahl von Anschlüssen (34) zum Anordnen der Verbindungsleitungen vorgesehen ist und wenigstens einer dieser Anschlüsse sich ausgehend von dem Ringkanal in einer Richtung erstreckt, welche sich in einem Winkel a von wenigstens 20° gegenüber der Ebene des Ringkanals erstreckt.

## Claims

1. Apparatus (1) for forming plastic preforms (10) into plastic containers (15), having a transport device (2) which transports the plastic preforms (10) along a predetermined transport path (P), wherein the transport device having a rotatable transport carrier (22) on which a plurality of forming stations for forming the plastic preforms (10) into the plastic containers (15) is arranged, wherein the forming stations each have application devices (84), in order to pressurize the plastic preforms with a flowable and in particular gaseous medium, and wherein the apparatus (1) has at least one rotatable annular channel (2a) coupled to the rotational movement of the transport carrier (22) for storing the flowable and in particular gaseous medium, and this annular channel is in flow connection with the individual forming stations (4) via connecting lines (32),
**characterized in that**
the annular channel extends in a predetermined plane and in particular a horizontal plane and a plurality of connections (34) are provided on the annular channel for arranging the connecting lines and at least one of these connections extends from the annular channel in a direction which extends at an angle a of at least 20° relative to the plane of the annular channel.

2. Apparatus (1) according to claim 1,
**characterized in that**
the angle a is greater than 25°, preferably greater than 30°, preferably greater than 35° and particularly preferably greater than 40° and/or the angle a is less than 80°, preferably less than 70°, preferably less than 60° and particularly preferably less than 50°.

3. Apparatus (1) according to at least one of the preceding claims,
**characterized in that**
the connecting lines are hose connections and in particular hose connections in accordance with DIN 20066 or DIN EN 853 and in particular at most in accordance with DIN 20066 or DIN EN 853.

4. Apparatus (1) according to at least one of the preceding claims,
**characterized in that**
the connecting lines are arranged detachably on the annular channel and, in particular, are arranged detachably on the annular channel without tools.

5. Apparatus (1) according to at least one of the preceding claims,
**characterized in that**
each forming station has a valve arrangement with a plurality of valve devices in order to control the application of several pressure levels to the plastic preforms.

6. Apparatus (1) according to at least one of the preceding claims,
**characterized in that**
the apparatus (1) has a plurality of annular channels (2a, 2b, 2c, 2d) and each of these annular channels has connections which extend from the annular channel in a direction which extends at an angle a of at least 20° with respect to the plane of the respective annular channel.

7. Apparatus (1) according to at least one of the preceding claims,
**characterized in that**
each connecting line has a first end section for connection to a valve arrangement of the forming station and a second end section for connection of the connecting line to the annular channel, and these end sections are marked in the same or different ways.

8. Apparatus (1) according to at least one of the preceding claims,
**characterized in that**
the apparatus comprises several annular channels (2a, 2b, 2c) and said annular channels (2a, 2b, 2c..) are formed in a common annular channel arrangement (200), wherein said annular channel arrangement comprising an inner annular channel part (202) defining each annular channel (2a, 2b, 2c) and an outer annular channel part (204) defining each annular channel (2a, 2b, 2c), wherein the inner annular channel part (202) is arranged inside the outer annular channel part.

9. Apparatus (1) according to at least one of the preceding claims,
**characterized in that**
the connecting line can be connected to the connection (34) without a gap and/or flat.

10. Apparatus (1) according to at least one of the preceding claims,
**characterized in that**
the connecting line has a hose and a hose nozzle.

11. Method for forming plastic preforms (10) into plastic containers (15), wherein a transport device (2) transports the plastic preforms (10) along a predetermined transport path (P), wherein the transport device has a rotatable transport carrier (22) on which a plurality of forming stations for forming the plastic preforms (10) into the plastic containers (15) is arranged, wherein the forming stations each have application devices (84) which apply the plastic preforms with the flowable medium and wherein the apparatus (1) has at least one rotatable annular channel (2a) which is coupled to the rotary movement of the transport carrier (22) and which stores the flowable and in particular gaseous medium and this annular channel is in flow connection with the individual forming stations (4) via connecting lines (32),
**characterized in that**
the annular channel extends in a preferred plane and in particular a horizontal plane and a plurality of connections (34) are provided on the annular channel for arranging the connecting lines and at least one of these connections extends from the annular channel in a direction which extends at an angle a of at least 20° relative to the plane of the annular channel.

## Revendications

1. Dispositif (1) de mise en forme de préformes en matière plastique (10) en des récipients en matière plastique (15) avec un système de transport (2) qui transporte les préformes en matière plastique (10) le long d'un trajet de transport (P) prédéfini, dans lequel le système de transport présente un support de transport rotatif (22) sur lequel est disposée une pluralité de stations de mise en forme pour la mise en forme des préformes en matière plastique (10) en les récipients en matière plastique (15), dans lequel les stations de mise en forme présentent respectivement des systèmes d'application (84) pour appliquer sur les préformes en matière plastique un milieu fluide et en particulier gazeux et dans lequel le dispositif (1) présente au moins un canal annulaire (2a) rotatif et couplé au mouvement de rotation du support de transport (22) pour le stockage du milieu fluide et en particulier gazeux et ledit canal annulaire est en communication fluidique avec les diverses stations de mise en forme (4) par l'intermédiaire de conduites de liaison (32),
**caractérisé en ce que**
le canal annulaire s'étend dans un plan prédéfini et en particulier dans un plan horizontal et une pluralité de raccords (34) est prévue sur le canal annulaire pour l'agencement des conduites de liaison et au moins un desdits raccords s'étend en partant du canal annulaire dans une direction qui s'étend à un angle a d'au moins 20° par rapport au plan du canal annulaire.

2. Dispositif (1) selon la revendication 1,
**caractérisé en ce que**
l'angle a est supérieur à 25°, de manière préférée supérieur à 30°, de manière préférée supérieur à 35° et de manière particulièrement préférée supérieur à 40° et/ou l'angle a est inférieur à 80°, de manière préférée inférieur à 70°, de manière préférée inférieur à 60° et de manière particulièrement préférée inférieur à 50°.

3. Dispositif (1) selon au moins l'une quelconque des revendications précédentes,
**caractérisé en ce que**
les conduites de liaison sont des raccords flexibles et en particulier des raccords flexibles conformes à la norme DIN 20066 ou DIN EN 853 et en particulier au maximum conformes à la norme DIN 20066 ou DIN EN 853.

4. Dispositif (1) selon au moins l'une quelconque des revendications précédentes,
**caractérisé en ce que**
les conduites de liaison sont disposées de manière amovible sur le canal annulaire et sont disposées de manière amovible sur le canal annulaire en particulier sans outil.

5. Dispositif (1) selon au moins l'une quelconque des revendications précédentes,
**caractérisé en ce que**
chaque station de mise en forme présente un ensemble de vannes avec une pluralité de systèmes de vanne pour commander l'application de plusieurs niveaux de pression sur les préformes en matière plastique.

6. Dispositif (1) selon au moins l'une quelconque des revendications précédentes,
**caractérisé en ce que**
le dispositif (1) présente une pluralité de canaux annulaires (2a, 2b, 2c, 2d) et chacun desdits canaux annulaires présente des raccords qui s'étendent en partant du canal annulaire dans une direction qui s'étend à un angle a d'au moins 20° par rapport au plan du canal annulaire respectif.

7. Dispositif (1) selon au moins l'une quelconque des revendications précédentes,
**caractérisé en ce que**
chaque conduite de liaison présente une première section d'extrémité pour le raccordement à un ensemble de vannes de la station de mise en forme et une deuxième section d'extrémité pour le raccordement de la conduite de liaison au canal annulaire et lesdites sections d'extrémité sont marquées de la même manière ou de manière différente.

8. Dispositif (1) selon au moins l'une quelconque des revendications précédentes,
**caractérisé en ce que**
le dispositif présente plusieurs canaux annulaires (2a, 2b, 2c) et lesdits canaux annulaires (2a, 2b, 2c..) sont réalisés selon un agencement de canal annulaire commun (200), dans lequel ledit agencement de canal annulaire présente une partie de canal annulaire intérieure (202), qui délimite chaque canal annulaire (2a, 2b, 2c), et une partie de canal annulaire extérieure (204), qui délimite chaque canal annulaire (2a, 2b, 2c), dans lequel la partie de canal annulaire intérieure (202) est disposée à l'intérieur de la partie de canal annulaire extérieure.

9. Dispositif (1) selon au moins l'une quelconque des revendications précédentes,
**caractérisé en ce que**
la conduite de liaison peut être raccordée sans interstice et/ou de manière plane au raccord (34).

10. Dispositif (1) selon au moins l'une quelconque des revendications précédentes,
**caractérisé en ce que**
la conduite de liaison présente un tuyau flexible et un embout de tuyau flexible.

11. Procédé de mise en forme de préformes en matière plastique (10) en des récipients en matière plastique (15), dans lequel un système de transport (2) transporte les préformes en matière plastique (10) le long d'un trajet de transport (P) prédéfini, dans lequel le système de transport présente un support de transport rotatif (22) sur lequel est disposée une pluralité de stations de mise en forme pour la mise en forme des préformes en matière plastique (10) vers les récipients en matière plastique (15), dans lequel les stations de mise en forme présentent respectivement des systèmes d'application (84) qui appliquent sur les préformes en matière plastique le milieu fluide et dans lequel le dispositif (1) présente au moins un canal annulaire (2a) rotatif et couplé au mouvement de rotation du support de transport (22), qui stocke le milieu fluide et en particulier gazeux et ledit canal annulaire est en communication fluidique avec les diverses stations de mise en forme (4) par l'intermédiaire de conduites de liaison (32),
**caractérisé en ce que**
le canal annulaire s'étend dans un plan préféré et en particulier dans un plan horizontal et une pluralité de raccords (34) est prévue sur le canal annulaire pour l'agencement des conduites de liaison et au moins un desdits raccords s'étend en partant du canal annulaire dans une direction qui s'étend à un angle a d'au moins 20° par rapport au plan du canal annulaire.
